# EUROPÄISCHE PATENTANMELDUNG

(11) **EP 4 411 195 A1**
(43) Veröffentlichungstag der Anmeldung: **07.08.2024**
(21) Anmeldenummer: 24153675.4
(22) Anmeldetag: 24.01.2024
(51) Int. Cl.: F16L 41/08, B65D 88/16, B65D 90/34, B67D 7/02, F16L 41/14, F16L 19/025

(54) **VERBINDUNGSSYSTEM, INSBESONDERE FÜR EIN GASAUSTAUSCH- ODER EVAKUIERUNGSSYSTEM, SOWIE ADAPTER UND DESSEN VERWENDUNG FÜR EIN SOLCHES VERBINDUNGSSYSTEM**

(30) Priorität: 21.04.2023 DE 102023110163; 01.02.2023 DE 102023102490
(71) Anmelder: FPS Investments B.V., 1181 LE Amstelveen (NL)
(72) Erfinder: Grewe, Andreas, 48432 Rheine (DE)
(74) Vertreter: Meissner Bolte Partnerschaft mbB

(57) **Zusammenfassung**

Die Erfindung betrifft ein Verbindungssystem, insbesondere für ein Gasaustausch- oder Evakuierungssystem, zum Verbinden eines Schlauchs oder Rohrs mit einem Behälter- oder Wandstutzen (10), wobei das Verbindungssystem
- einen Adapter (20) mit einer stutzenseitigen Verbindungsvorrichtung (30) und einer geräteseitigen Verbindungsvorrichtung (40) sowie einen zwischen der stutzenseitigen (30) und der geräteseitigen Verbindungsvorrichtung (40) angeordneten durchgängigen Leitungsabschnitt (50), sowie
- einen mit der stutzenseitigen Verbindungsvorrichtung (30) zusammenwirkenden Behälter- oder Wandstutzen (10), sowie ferner
- einen mit der geräteseitigen Verbindungsvorrichtung (40) zusammenwirkenden Klemm- (60) und/oder Gewindeabschnitt (65) eines Schlauchs oder Rohrs
umfasst, und die stutzenseitige Verbindungsvorrichtung (30) topfartig ausgebildet ist und einen Boden (70) mit einer mit dem durchgängigen Leitungsabschnitt (50) kommunizierenden Öffnung (80) sowie eine sich um die Öffnung (80) erstreckende an dem Boden (70) umlaufende Seitenwandung (90) aufweist, wobei die Seitenwandung (90) in eine behälter- oder wandstutzenseitige Nut (100) einschiebbar und in einer in die Nut (100) eingeschobenen Position fixierbar ist, sowie ferner einen Adapter und dessen Verwendung für ein solches Verbindungssystem.

## Beschreibung

Die Erfindung betrifft ein Verbindungssystem, insbesondere für ein Gasaustausch- oder Evakuierungssystem, nach dem Oberbegriff von Anspruch 1 sowie einen Adapter und dessen Verwendung für ein solches Verbindungssystem nach den Oberbegriffen der Ansprüche 13 und 14.

Verbindungssysteme, mit welchen eine Verbindung zwischen einem Schlauch oder Rohr und einem Stutzen, der beispielsweise an einer Wandung eines Behälters oder einer Wand angeordnet und in der Regel einer Ein- oder Auslassöffnung zugeordnet ist, sind seit geraumer Zeit bekannt. Derartige Verbindungssysteme umfassen vielfach einen Adapter, der zwischen dem Schlauch oder Rohr, d.h. geräteseitig, einerseits und dem Stutzen, d.h. stutzenseitig, andererseits angeordnet wird und auf diese Weise eine Anschlusskompatibilität zwischen dem Schlauch oder Rohr und dem Stutzen herstellt und gewährleistet.

Derartige Verbindungssysteme werden beispielsweise im Bereich von Big Bags oder IBCs (Intermediate Bulk Container) verwendet, die unter anderem zum Abfüllen und Transportieren von Lebensmitteln, wie beispielsweise unter anderem auch Milchpulver und/oder Babynahrung, dienen. Unter Verwendung solcher Verbindungssysteme wird beispielsweise ein Schlauch oder Rohr an dem Stutzen eines IBCs angeschlossen, wobei der Schlauch oder das Rohr einerseits mit einer Entlüftungseinrichtung oder Vakuumeinrichtung sowie andererseits mit einer Begasungseinrichtung verbunden ist oder verbunden werden kann. Nach einem Anschluss des Schlauchs oder Rohrs an den IBC kann dann zunächst eine Entlüftung oder Vakuumierung, respektive Evakuierung, des IBCs und im Anschluss daran eine Belüftung, respektive Befüllung, des IBCs mit einem Inertgas, wie beispielsweise Stickstoff oder Argon, durchgeführt werden.

Ein derartiges Verbindungssystem wird beispielsweise in der niederländischen Patentschrift NL 2 027 612 B1 beschrieben, bei welchem ein an einem Behälter befindlicher Stutzen stutzenseitig mit einem Adapter verbunden wird, der seinerseits einerseits eine stutzenseitige Verbindungsvorrichtung und andererseits eine geräteseitige Verbindungsvorrichtung aufweist, wobei die stutzenseitige Verbindungsvorrichtung und die geräteseitige Verbindungsvorrichtung über einen rohrförmigen durchgängigen Leitungsabschnitt miteinander verbunden sind. Am geräteseitigen Ende des dortigen Adapters befindet sich ein adapterseitiger Teil einer Klemmvorrichtung, während am stutzenseitigen Ende des Adapters eine Steck-/Schraubvorrichtung vorgesehen ist. Diese Steck-/Schraubvorrichtung funktioniert ihrerseits so, dass ein ringförmiger adapterseitiger an seinem distalen Ende in etwa gabelförmig ausgebildeter Stecker einen inneren Ring des IBC-seitigen Stutzens im Wesentlichen U-förmig übergreift, wobei die Schenkel des "U" unterschiedlich lang sind und die "Tiefe" des "U" einer Einschubbegrenzung des adapterseitigen Steckers in den Stutzen des IBCs dient. Der ringförmige radial äußere Schenkel des "U" ist hierbei kürzer als der radial innere Schenkel des "U" ausgebildet und greift an einem oberen Ende in eine ringförmig ausgebildete Nut des IBC-seitigen Stutzens ein, während der konzentrisch zu dem äußeren Schenkel verlaufende radial innere Schenkel des "U" länger als der radial äußere Schenkel des "U" ist und eine Ausnehmung für einen O-Ring aufweist, die wiederum in Richtung des radial außenliegenden äußeren Schenkels des "U" weist. Eine für einen Gasaustausch notwendige Dichtung zwischen dem adapterseitigen Stecker und dem Stutzen wird durch den O-Ring gewährleistet, der in der Ausnehmung des radial innenliegenden Schenkels des "U" angeordnet ist und ausschließlich den radial inneren Schenkel des adapterseitigen Steckers gegenüber dem inneren Ring des IBC-seitigen Stutzens, durch den gemäß der NL 2 027 612 B1 eine innere Wandung der dortigen stutzenseitigen Nut gebildet ist, in welche der radial äußere Schenkel des "U" eingreift, abdichtet. Eine Fixierung des adapterseitigen Steckers an dem IBC-seitigen Stutzen wird durch eine Überwurfmutter gewährleistet, die entlang des Leitungsabschnitts über den adapterseitigen Stecker gestülpt und mit einem äußeren Ring des IBC-seitigen Stutzens verschraubt wird.

Ein wesentlicher Nachteil des Verbindungssystems gemäß der NL 2 027 612 B1 besteht darin, dass bei einem Aufsetzen des Adapters auf den behälter- oder wandseitigen Stutzen die Gefahr besteht, dass der O-Ring durch die radial innenliegende Wandung der stutzenseitigen Nut, die bei einer Herstellung einer Verbindung zwischen Adapter und Stutzen in die gabelförmige "U"-Form des stutzenseitigen Endes des Adapters eingeschoben wird, aus seiner Ausnehmung hinausgeschoben wird. In gleicher Weise besteht die Gefahr, dass der O-Ring bei einem Trennen der Verbindung zwischen Adapter und Stutzen aus seiner Ausnehmung herausgezogen wird. In jedem Fall wird der gemäß der NL 2 027 612 B1 für eine zuverlässige Dichtung notwendige O-Ring sowohl bei einem Verbinden als auch bei einem Trennen des Adapters und des Stutzens mechanisch stark belastet, was nicht nur zu einem hohen Verschleiß des O-Rings und des stutzenseitigen Endes des Adapters gemäß der NL 2 027 612 B1 führt, sondern immer auch die Gefahr birgt, dass sich der O-Ring aus der Ausnehmung des radial innenliegenden Schenkels des Adapters löst und in den Behälter fällt, was zum einen dazu führen würde, dass zwischen dem Stutzen und dem stutzenseitigen Ende des Adapters keine Dichtigkeit mehr gewährleistet wäre und darüber hinaus das Füllgut des Behälters durch den in den Behälter gefallenen O-Ring verunreinigt bzw. kontaminiert wäre, was im schlimmsten Fall zum vollständigen Verlust des Füllguts führen würde.

Darüber hinaus erfordert die Verwendung eines O-Rings eine äußerst stabile Konstruktion des stutzenseitigen Endes des Adapters, die gemäß der NL 2 027 612 B1 dadurch realisiert ist, dass das stutzenseitige Ende des dortigen Adapters, wie vorerwähnt, gabelförmig, respektive "U"-förmig ausgebildet ist, wobei ein radial äußerer Schenkel als Führungs- und Sicherungsschenkel dient, um das stutzenseitige Ende des Adapters an dem Adapter zu verankern, indem der radial äußere Schenkel des Adapters in die stutzenseitige Nut so eingreift, dass der radial äußere Schenkel des Adapters gegen die radial innenliegende Wandung der Nut des Stutzens eine dem O-Ring entgegenwirkende Kraft ausübt, so dass die innere Wandung der stutzenseitigen Nut unter der durch den O-Ring wirkenden Kraft nicht nach radial außen ausweicht.

Somit ist das Verbindungssystem gemäß der NL 2 027 612 B1 nicht nur kompliziert und hinsichtlich seiner Herstellung teuer ausgebildet, sondern es erfordert auch eine sehr exakte Handhabung, bei welcher ein exakt passgenauer Sitz der beiden Schenkel des stutzenseitigen Endes des Adapters in der stutzenseitigen Nut einerseits sowie an der inneren Wandung der stutzenseitigen Nut andererseits gewährleistet ist, ohne den eine zuverlässige Dichtung bei dem dortigen Verbindungssystem nicht gewährleistet wäre. Darüber hinaus besteht bei dem dortigen Verbindungssystem die große Gefahr, dass der O-Ring nicht zuverlässig in der für ihn vorgesehenen Ausnehmung verbleibt, was zwangsläufig zu einem undicht werden des dortigen Systems führt und darüber hinaus die Gefahr einer Kontamination des Behälterinhalts birgt, da eine Dichtung bei dem Verbindungssystem gemäß der NL 2 027 612 B1 ausschließlich durch den dortigen O-Ring möglich ist.

Die Aufgabe der Erfindung besteht darin, ein alternatives Verbindungssystem sowie ferner einen alternativen Adapter und dessen Verwendung zur Verfügung zu stellen, durch das, respektive durch den, die oben genannten Probleme beseitigt sind, wobei das alternative Verbindungssystem, respektive der alternative Adapter, für bestehende Schlauch- oder Rohr- sowie Stutzensysteme geeignet und alternativ verwendbar sowie im Übrigen konstruktiv einfach und kostengünstig herstellbar ist.

Diese Aufgabe wird erfindungsgemäß mit einem Verbindungssystem gemäß Anspruch 1, einem Adapter gemäß Anspruch 13 und durch die Verwendung eines solchen Adapters gemäß Anspruch 14 gelöst.

Insbesondere wird diese Aufgabe durch ein Verbindungssystem, insbesondere für ein Gasaustausch- oder Evakuierungssystem, zum Verbinden eines Schlauchs oder Rohrs mit einem Behälter- oder Wandstutzen gelöst, wobei das Verbindungssystem
- einen Adapter mit einer stutzenseitigen Verbindungsvorrichtung und einer geräteseitigen Verbindungsvorrichtung sowie einen zwischen der stutzenseitigen und der geräteseitigen Verbindungsvorrichtung angeordneten durchgängigen Leitungsabschnitt, sowie
- einen mit der stutzenseitigen Verbindungsvorrichtung zusammenwirkenden Behälter- oder Wandstutzen, sowie ferner
- einen mit der geräteseitigen Verbindungsvorrichtung zusammenwirkenden Klemm- und/oder Gewindeabschnitt eines Schlauchs oder Rohrs
umfasst, wobei die stutzenseitige Verbindungsvorrichtung topfartig ausgebildet ist und einen Boden mit einer mit dem durchgängigen Leitungsabschnitt kommunizierenden Öffnung sowie eine sich um die Öffnung erstreckende an dem Boden umlaufende Seitenwandung aufweist, wobei die Seitenwandung in eine behälter- oder wandstutzenseitige Nut einschiebbar und in einer in die Nut eingeschobenen Position fixierbar ist.

Ein wesentlicher Punkt des erfindungsgemäßen Verbindungssystems besteht darin, dass das Verbindungssystem einen Adapter umfasst, der eine stutzenseitige und eine geräteseitige Verbindungsvorrichtung aufweist, die jeweils einander gegenüberliegend an entgegengesetzten Enden eines Leitungsabschnitts des Adapters angeordnet sind, der so ausgestaltet ist, dass ein stutzenseitiges Ende und ein geräteseitiges Ende durch den Leitungsabschnitt, der im Wesentlichen zumeist rohrförmig und durchgängig ausgebildet ist, kommunizieren kann.

Die geräteseitige Verbindungsvorrichtung des Adapters weist ihrerseits einen Klemm- und/oder einen Gewindeabschnitt auf, an welchem ein Rohr oder ein Schlauch in dichter Weise befestigt werden kann.

Die stutzenseitige Verbindungsvorrichtung ist ihrerseits topfartig ausgebildet, wobei hiermit eine Konstruktion bezeichnet ist, die aus einem Boden und einer sich von dem Boden weg erstreckenden und an dem Boden umlaufenden Seitenwandung besteht. Die Seitenwandung kann sich hierbei unmittelbar am Seitenrand des Bodens oder vom Seitenrand des Bodens etwas nach innen versetzt erstrecken. Wie bei einem Topf üblich, ist die Seitenwandung der erfindungsgemäßen stutzenseitigen Verbindungsvorrichtung einwandig und ohne Verzweigungen oder Ausnehmungen ausgebildet. Insbesondere ist die Seitenwandung der erfindungsgemäßen stutzenseitigen Verbindungsvorrichtung des Adapters glatt ausgebildet und erfordert für eine dichtende Verbindung mit dem Stutzen keinerlei zusätzliche Dichtmittel, wie beispielsweise einen O-Ring, Gummimanschetten oder dergleichen Dichtmaterialien.

Des Weiteren weist der Boden der erfindungsgemäßen stutzenseitigen Verbindungsvorrichtung eine Öffnung auf, durch welche das "Innere des Topfes" mit dem durchgängigen Leitungsabschnitt, der unmittelbar an der Öffnung des Bodens angeordnet und dicht mit dem Boden verbunden ist, kommunizieren kann.

Des Weiteren sei darauf hingewiesen, dass der Umfang der erfindungsgemäßen stutzenseitigen Verbindungsvorrichtung zwar in der Regel entsprechend der Umfangsform des Stutzens und auch bevorzugt rund ausgebildet ist, jedoch je nach einer Umfangsform des Stutzens auch oval oder eckig ausgebildet sein kann, nämlich jeweils in Abhängigkeit davon, in welcher Weise die Nut, in welche die Seitenwandung der topfartig ausgebildeten stutzenseitigen Verbindungsvorrichtung eingeschoben wird, ausgebildet ist.

Zur Herstellung einer Verbindung zwischen der stutzenseitigen Verbindungsvorrichtung und damit des Adapters mit einem an einem Behälter oder einer Wand befindlichen Stutzen wird die Seitenwandung erfindungsgemäß in eine an dem Stutzen ausgebildete Nut eingeschoben und in diesem in die Nut eingeschobenen Zustand solange fixiert, wie dies für die gewünschte Tätigkeit, beispielsweise eine Entlüftung und/oder eine Belüftung des Behälters, notwendig ist. Eine perfekt dichtende Wirkung wird erfindungsgemäß hierbei dadurch erreicht, dass die Seitenwandung der erfindungsgemäßen stutzenseitigen Verbindungsvorrichtung glatt und dichtend an der Außenwandung der Nut anliegt.

Eine Einschubtiefe, mit der die Seitenwandung erfindungsgemäß in die in dem Stutzen vorhandene Nut eingeschoben wird, ist unter anderem durch die Tiefe der Nut vorgegeben, wobei die stutzenseitige Verbindungsvorrichtung mit ihrer Seitenwandung bis zum Boden der Nut in die Nut eingeschoben wird, so dass sich insbesondere dann, wenn die stutzenseitige Verbindungsvorrichtung in ihrer Endposition an dem Stutzen fixiert ist, zwischen dem Boden der Nut und dem dem Boden des nutzugewandten Endes der Seitenwandung ein dichtender Formschluss ergibt.

Gemäß einer bevorzugten Ausführungsform der Erfindung ist die Seitenwandung der topfartigen stutzenseitigen Verbindungsvorrichtung hierzu an ihrem nutseitigen Ende glatt und eben ausgebildet, so dass das nutseitige Ende in verbundenem Zustand des Adapters mit dem Behälter- oder Wandstutzen, insbesondere dichtend, formschlüssig am Boden der Nut anliegt.

Gemäß einer weiteren bevorzugten Ausführungsform der Erfindung wird eine Fixierung der Seitenwandung in der Nut mittels wenigstens einer radial außenseitig der Nut angeordneten wieder lösbaren Rastvorrichtung oder mittels einer sich über die topfartige stutzenseitige Verbindungsvorrichtung erstreckenden und mit einer radial außenseitig der Nut angeordneten Gewinde- oder Bajonettverschlussvorrichtung verschraubbaren Überwurfmutter durchgeführt.

Zu diesem Zweck weist die behälter- oder wandstutzenseitige Nut zumindest einen sich im Wesentlichen konzentrisch von dem Behälter oder der Wand weg erstreckenden in radialer Richtung äußeren Steg auf, der an seiner, wiederum in radialer Richtung gesehen, äußeren Seite wenigstens ein Rastelement und/oder die mit der Überwurfmutter zusammenwirkende Feststellvorrichtung, insbesondere eine Schraubvorrichtung, aufweist.

Gemäß einer bevorzugten Ausführungsform der Erfindung sind rund um den Umfang des äußeren Stegs mehrere, d. h. mindestens zwei, bevorzugt jedoch drei oder mehr Rastelemente vorgesehen, die in einem gleichmäßigen Abstand rund um den Umfang des äußeren Stegs angeordnet sind und mit korrespondierenden Rastelementen zusammenwirken, die entweder direkt an der stutzenseitigen Verbindungsvorrichtung oder gegebenenfalls auch dem Leitungsabschnitt des Adapters, der fest mit der stutzenseitigen Verbindungsvorrichtung verbunden ist, angeordnet sind. Alternativ können diese korrespondierenden Rastelemente auch in der Art einer Überwurfmutter ausgebildet sein, die über den Leitungsabschnitt des Adapters in Richtung der stutzenseitigen Verbindungsvorrichtung geführt ist und in ihrer verrasteten und damit fixierten Endposition die stutzenseitige Verbindungsvorrichtung fest an dem Stutzen fixiert.

Gemäß einer alternativen Ausführungsform kann die stutzenseitige Verbindungsvorrichtung auch mittels einer Überwurfmutter, die durch den Leitungsabschnitt des Adapters geführt ist, an dem äußeren Steg befestigt sein. Zu diesem Zweck weist der äußere Steg auf seiner radial äußeren Seite eine Schraubvorrichtung, wie beispielsweise ein Gewinde oder ein Bajonett, auf, das mit einem an der Innenseite der Überwurfmutter angeordneten korrespondierenden Gewinde oder Bajonett zusammenwirkt.

Gemäß einer bevorzugten Ausführungsform der Erfindung ist die Überwurfmutter aus einem formstabilen Material hergestellt, das beispielsweise ein Metall sein kann, wobei erfindungsgemäß insbesondere Edelstahl ein bevorzugtes Material darstellt. Des Weiteren kann die Überwurfmutter auch aus einem formstabilen Kunststoff hergestellt sein, wobei sich insbesondere Kunststoffe mit duroplastischen Eigenschaften besonders gut eignen, wobei allerdings auch Materialien, wie beispielsweise Polyethylen oder Polypropylen zum Einsatz kommen können. Gemäß einer besonders bevorzugten Ausführungsform kann als Kunststoff an dieser Stelle auch Polytetrafluorethylen (PTFE), das unter anderem auch als Teflon bezeichnet wird, verwendet werden. Im Falle einer Verwendung von Kunststoff ist insbesondere darauf zu achten, dass es sich bei diesem Kunststoff hinsichtlich seiner Güte um einen lebensmittelechten, d. h. einen bei der Verarbeitung und Verpackung von Lebensmitteln zugelassenen Kunststoff handelt. Diesbezüglich sei darauf hingewiesen, dass insbesondere der Einsatz eines Kunststoffs zur Herstellung der Überwurfmutter, respektive der Einsatz einer Überwurfmutter aus Kunststoff, zu einer vorteilhaften Gewichtseinsparung bei dem erfindungsgemäßen Verbindungssystem führte, was insbesondere dessen Handhabung vereinfacht. Darüber hinaus kann eine Überwurfmutter aus Kunststoff gegenüber einer Überwurfmutter aus Metall besonders kostengünstig hergestellt werden.

Somit ist sowohl mit der vorgenannten Rastverbindung als auch mit der vorgenannten Schraubverbindung eine optimierte Fixierung der stutzenseitigen Verbindungsvorrichtung an dem Stutzen möglich, die bei Bedarf unproblematisch auch wieder geöffnet werden kann, um die stutzenseitige Verbindungsvorrichtung des Adapters mit dem Stutzen eines anderen Behälters oder einem Stutzen an einer anderen Wand zu verbinden.

Gemäß einer Ausführungsform der Erfindung ist die behälter- oder wandstutzenseitige Nut von dem äußeren Steg und einem konzentrisch zu dem äußeren Steg verlaufenden inneren Steg gebildet.

Gemäß dieser Ausführungsform erstrecken sich beide Stege, d. h. der sich näher an der Öffnung eines Behälters oder einer Wand befindliche innere Steg und der äußere Steg, der an seiner radial äußeren Seite vorerwähnte Befestigungsmittel zur Fixierung der stutzenseitigen Verbindungsvorrichtung aufweist, im Wesentlichen parallel zueinander und im Wesentlichen rechtwinklig von dem Behälter oder der Wand weg, so dass die Seitenwandung der stutzenseitigen Verbindungsvorrichtung einfach in die von den beiden Stegen gebildete Nut eingesetzt und bis zum Boden der Nut geschoben werden kann.

Gemäß einer alternativen Ausführungsform der Erfindung kann die Nut auch umlaufend in einer flächigen Scheibe ausgebildet, beispielsweise eingefräst, sein, so dass die Nut durch einen äußeren Steg einerseits und die Ebene der flächigen Scheibe andererseits begrenzt ist.

Gemäß einer weiteren bevorzugten Ausführungsform verjüngt sich ein Umfang der Seitenwandung und/oder eine Außenseite der Seitenwandung der stutzenseitigen Verbindungsvorrichtung ausgehend vom Boden der stutzenseitigen Verbindungsvorrichtung hin zu einem offenen Ende der stutzenseitigen Verbindungsvorrichtung.

Diese Verjüngung des Umfangs der Seitenwandung, insbesondere der äußeren Seite der Seitenwandung, die in die Nut eingesetztem Zustand dem äußeren Steg der Nut zugewandt ist, kann gleichförmig oder in Richtung des offenen Endes der stutzenseitigen Verbindungsvorrichtung zunehmend konisch ausgebildet sein. Hierbei kann die Seitenwandung in ihrer Gänze leicht konisch verlaufen, so dass sich der Umfang der Seitenwandung von ihrem bodenseitigen Ende hin zu ihrem offenen Ende zunehmend verkleinert. Des Weiteren kann sich gemäß einer weiteren Ausführungsform der Erfindung auch nur die äußere Seite der Seitenwandung in Richtung des offenen Endes der stutzenseitigen Verbindungsvorrichtung verjüngen, wobei sich die Dicke der Seitenwandung von dem bodenseitigen Ende der Seitenwandung hin zu dem offenen Ende der Seitenwandung reduziert. Das Maß der Verjüngung der Seitenwandung von ihrem bodenseitigen Ende hin zu ihrem offenen Ende liegt hierbei in einem Bereich von 0,8° bis 5°, bevorzugt in einem Bereich von 1,2° bis 3,5° und besonders bevorzugt in einem Bereich von 1,4° bis 2,5°.

Ein wesentlicher Vorteil der Verjüngung des Umfangs der Seitenwandung von ihrem bodenseitigen Ende hin zu ihrem offenen Ende liegt darin, dass es auf diese Weise deutlich vereinfacht ist, die Seitenwandung in die Nut einzusetzen, da aufgrund der Verjüngung nicht zu befürchten ist, dass das nutseitige Ende der Seitenwandung versehentlich nicht direkt in die Nut eingesetzt, sondern zunächst auf eine Oberseite eines Stegs der Nut aufgesetzt wird. Durch die Verjüngung des Umfangs der Seitenwandung wird somit vermieden, dass die Oberseite des Stegs einer Nut, möglicherweise beim Versuch die Seitenwandung in die Nut einzusetzen, beschädigt wird.

Darüber hinaus weist die Verjüngung des Umfangs der Seitenwandung von ihrem bodenseitigen Ende hin zu ihrem offenen Ende auch den maßgeblichen Vorteil auf, dass sich die äußere Seite der Seitenwandung im Zuge des Einsetzens der Seitenwandung in die Nut zunehmend der inneren Seite des äußeren Stegs annähert, so dass im Zuge des Einsetzens der Seitenwandung in die Nut zwangsläufig ein Formschluss zwischen der äußeren Seite der Seitenwandung und der inneren Seite des äußeren Stegs des Stutzens und somit eine dichte Verbindung zwischen der stutzenseitigen Verbindungsvorrichtung und dem Stutzen entsteht. Letzteres ist besonders vorteilhaft, wenn eine Erstreckung, beispielsweise ein Durchmesser oder ein Umfang, des Bodens der stutzenseitigen Verbindungsvorrichtung exakt auf die Erstreckung, beispielsweise einen Durchmesser oder einen Umfang, des äußeren Stegs abgestimmt ist. Dies bedeutet, dass ein Maß des Bodens entweder exakt einem Innenmaß des äußeren Stegs entspricht oder das Maß des Bodens etwas größer als das Innenmaß des äußeren Stegs ist, so dass die stutzenseitige Verbindungsvorrichtung quasi keilförmig in das Innenmaß des äußeren Stegs und damit in die Nut eingesetzt wird.

In besonders vorteilhafter Weise kann die topfartig ausgebildete stutzenseitige Verbindungsvorrichtung des Adapters somit einfach in eine zumindest äußere

Seitenwandung der Nut des Stutzens, d. h. den äußeren Steg, eingesetzt werden, wobei die äußere Seitenwandung der stutzenseitigen Verbindungsvorrichtung sich der inneren Seitenwandung der Nut des Stutzens im Zuge eines Einsteckens bzw. Zusammenführens von Adapter und Stutzen immer mehr annähert und schließlich eine dichte und gegebenenfalls auch klemmende Verbindung zwischen Adapter und Stutzen gewährleistet. In gewisser Weise ist die Verbindung zwischen dem stutzenseitigen Ende des Adapters und dem Stutzen damit einem konischen Korken vergleichbar, der in einen Stutzen eingesetzt wird, um an der Verbindungslinie oder Verbindungsfläche zwischen Korken und Stutzen eine dichte und passgenaue Verbindung zu liefern. Aufgrund der Tatsache, dass die stutzenseitige Verbindungsvorrichtung erfindungsgemäß an ihrem oberen, dem Boden des Adapters zugewandten Ende breiter ausgebildet ist als der äußere Steg des Stutzens und sich die stutzenseitige Verbindungsvorrichtung, respektive die Seitenwandung der topfförmig ausgebildeten stutzenseitigen Verbindungsvorrichtung, in Richtung des Stutzens verjüngt, kann die stutzenseitige Verbindungsvorrichtung einfach zwischen die durch den äußeren Steg des Stutzens definierte Wandung des Stutzens eingeschoben werden und nähert sich dabei mit zunehmender Einschubtiefe mit ihrer Seitenwandung immer mehr der Innenseite des äußeren Stegs des Stutzens an und kommt schließlich in eine dichtende und gegebenenfalls festgeklemmte Position, in welcher die Verbindung zwischen Adapter und Stutzen zusätzlich durch eine Überwurfmutter oder eine sonstige Sicherungseinrichtung gesichert werden kann.

Diese erfindungsgemäße Ausführungsform ist insbesondere deshalb besonders vorteilhaft, da zur Herstellung einer dichten Verbindung zwischen Adapter und Stutzen keinerlei zusätzliche Dichtmittel notwendig sind, sondern das stutzenseitige Ende des Adapters lediglich in die durch den äußeren Steg gebildete Wandung des Stutzens eingesetzt werden muss und einfach wieder daraus entfernt werden kann, wobei das Einsetzen durch die konische Ausbildung der Seitenwandung der stutzenseitigen Verbindungsvorrichtung selbstführend ist.

Für den Fall, dass die stutzenseitige Verbindungsvorrichtung des erfindungsgemäßen Adapters eine konisch verlaufende Seitenwandung aufweist, sei darauf hingewiesen, dass die Seitenwandung des Adapters sich nicht bis zu einem stutzenseitigen Boden erstrecken muss, da in diesem Fall eine Dichtung nicht durch eine formschlüssige Verbindung der Seitenwandung mit dem stutzenseitigen Boden, respektive dem Boden der stutzenseitigen Nut, zustande kommt, sondern dadurch, dass die Seitenwandung mit zunehmender Einschubtiefe in den Stutzen, respektive den äußeren Steg des Stutzens, mit dem äußeren Steg selbst eine dichte Verbindung liefert.

Darüber hinaus kann der erfindungsgemäße Adapter mit seinem stutzenseitigen topfförmigen konischen Ende aufgrund der konischen Ausführung der Seitenwandung wesentlich einfacher wieder von dem Stutzen getrennt werden, nämlich durch ein einfaches Herausziehen aus der Nut oder dem umlaufenden äußeren Steg des Stutzens, während beim Stand der Technik , insbesondere beim Gegenstand der NL 2 027 612 B1, eine Trennung von Adapter und Stutzen aufgrund der dort zur Sicherstellung einer dichten Verbindung zwischen Adapter und Stutzen notwendigen "O-Ring-Klemmung" nur relativ schwer und mit erheblichen Kraftaufwand möglich ist und bei dieser Tätigkeit außerdem permanent die Gefahr besteht, dass sich der O-Ring aus seiner Ausnehmung löst und mit herausgezogen wird und gegebenenfalls verloren geht und im schlimmsten Fall in den Behälter fällt und das Füllgut kontaminiert. Demgegenüber ist eine Trennung mit dem erfindungsgemäßen Adapter völlig problemlos, da dieser keine verlierbaren Teile aufweist und sich der neue Adapter wesentlich einfacher von den Stutzen löst, weil sich der Konus der Seitenwandung nach unten verjüngt.

Bei einem anschließenden Fixieren der stutzenseitigen Verbindungsvorrichtung in der Nut mittels einer Schnapp-/Rast- oder Schraubsicherung kann sodann ein weiteres Einpressen der stutzenseitigen Verbindungsvorrichtung, respektive von deren Seitenwandung, in die Nut erfolgen, so dass eine sichere und dichte Verbindung zwischen der stutzenseitigen Verbindungsvorrichtung und dem Stutzen sichergestellt wird. Die Dichtung zwischen der stutzenseitigen Verbindungsvorrichtung und dem Stutzen ergibt sich somit entweder durch die formschlüssige Verbindung des bodenseitigen Endes der Seitenwandung mit dem Boden der Nut oder durch die konische Form der Seitenwandung, die sich bei einem zunehmenden Einsetzen in die Nut zunehmend an die Innenseite des äußeren Stegs anpresst und hier ebenfalls einen Formschluss bildet. Gemäß einer vorteilhaften Ausführungsform der Erfindung können zur Erzeugung einer Dichtigkeit zwischen der stutzenseitigen Verbindungsvorrichtung und dem Stutzen auch beide oben genannten Formschlüsse Verwendung finden.

Als besonders vorteilhaft hat es sich erfindungsgemäß auch erwiesen, wenn eine sich in Richtung des Leitungsabschnitts erstreckende äußere Bodenseite der topfartigen stutzenseitigen Verbindungsvorrichtung in Richtung des durchgängigen, vorzugsweise rohrförmigen, Leitungsabschnitt zumindest abschnittsweise, gegebenenfalls absatzförmig, ansteigt, wobei an der äußeren Bodenseite zumindest ein Absatz oder zumindest zwei, vorzugsweise wenigstens drei gleichförmige Erhebungen um den Leitungsabschnitt herum ausgebildet sind.

Gemäß dieser Ausführungsform ist ein sicherer und inniger Kontakt zwischen der Überwurfmutter oder der Überwurfrastvorrichtung und der leitungsabschnittseitigen Seite des Bodens gewährleistet, da sich die Seite der Überwurfmutter oder der Überwurfrastvorrichtung, die der leitungsabschnittseitigen Seite des Bodens zugewandt ist, bei einem Fixieren oder im Zuge eines Fixierens der Überwurfmutter oder der Überwurfrastvorrichtung zwangsweise an die Erhebung, beispielsweise den Absatz auf der leitungsabschnittseitigen Seite des Bodens anpresst und damit im Gegenzug die Seitenwandung der stutzenseitigen Verbindungsvorrichtung, gegebenenfalls zunehmend, in die Nut und an die innere Wandung des äußeren Stegs presst.

Wie vorstehend ausgeführt, kann die Erhebung als gegebenenfalls stufenförmig ausgebildeter Absatz ausgebildet sein, der sich vollständig um den Leitungsabschnitt herum erstreckt; alternativ können auch zwei, vorzugsweise drei oder mehr stegförmige und gegebenenfalls ebenfalls stufenförmig augebildete Erhebungen auf der leitungsabschnittseitigen Seite des Bodens ausgebildet sein, die sich in gleichmäßigen Abständen auf der leitungsabschnittseitigen Seite des Bodens um den Leitungsabschnitt herum erstrecken, so dass die Überwurfmutter oder die Überwurfrastvorrichtung die stutzenseitige Verbindungsvorrichtung homogen und gleichmäßig in die Nut einpresst und dort fixiert.

Gemäß einer weiteren Ausführungsform der Erfindung ist eine Innenseite, insbesondere eine innere Bodenseite, der topfartigen stutzenseitigen Verbindungsvorrichtung in Richtung der mit dem durchgängigen Leitungsabschnitt kommunizierenden Öffnung trichterartig ausgebildet.

Eine derartige trichterartige Ausbildung der inneren Bodenseite der topfartigen stutzenseitigen Verbindungsvorrichtung begünstigt in vorteilhafter Weise eine Strömungsführung sowohl bei einem Evakuieren als auch bei einem Begasen des mit dem Stutzen ausgebildeten Behälters oder Raums. Insbesondere wird durch die trichterartige Ausbildung der inneren Bodenseite der stutzenseitigen Verbindungsvorrichtung ein strahlförmiger Sog und ein strahlförmiges Einblasen eines Gases und damit ein etwaiges Aufwirbeln von Füllgut oder eine strahlförmige Belastung eines etwaigen zwischengeschalteten Filters vermieden.

Gemäß einer weiteren besonders bevorzugten Ausführungsform weist die stutzenseitige Verbindungsvorrichtung des Adapters, insbesondere gemäß vorstehenden Ausführungen, keine verlierbaren oder lösbaren Dichtungsteile, insbesondere keine(n) Dichtungs- und/oder O-Ring(e), auf.

Ein wesentlicher Vorteil der Erfindung geht damit einher, dass, wie vorerwähnt und anders als beim Stand der Technik, auf verlierbare Dichtungsteile verzichtet werden kann, da eine Dichtung zwischen der stutzenseitigen Verbindungsvorrichtung und dem Stutzen ausschließlich durch eine innige und dichtende Anlage der stutzenseitigen Verbindungsvorrichtung an dem Stutzen erreicht wird, ohne dass, wie beim Stand der Technik, Gummidichtungen verwendet werden müssen. Letzteres wird unter anderem dadurch erreicht, dass die Materialien der stutzenseitigen Verbindungsvorrichtung und des Stutzens so gewählt sind, dass ein inniger Formschluss zwischen diesen Materialien sowie den daraus hergestellten Vorrichtungsteilen möglich ist. So kann die stutzenseitige Verbindungsvorrichtung beispielsweise aus Metall und der Stutzen, respektive insbesondere die Teile des Stutzens, die mit der stutzenseitigen Verbindungsvorrichtung in dichtenden Kontakt kommen, aus Kunststoff, beispielsweise Polyethylen oder Polypropylen, hergestellt sein. Auf diese Weise ist gewährleistet, dass sich der Kunststoffpart innig an den Metallpart anschmiegt und auf diese Weise eine dichte formschlüssige Verbindung gewährleistet.

In besonders vorteilhafter Weise ist somit eine Kontamination des Füllguts mit Dichtungsteilen, wie dies beim Stand der Technik zu befürchten ist, erfindungsgemäß nicht möglich, da auf derartige verlierbare Teile erfindungsgemäß vollständig verzichtet wird.

Gemäß einer weiteren besonders vorteilhaften Ausführungsform der Erfindung umfasst das Verbindungssystem ferner einen Blindstopfen mit und/oder an dem die stutzenseitige Verbindungsvorrichtung des Adapters in einer Ruhestellung des Verbindungssystems, in welcher die stutzenseitige Verbindungsvorrichtung des Adapters nicht mit dem Behälter- oder Wandstutzen zusammenwirkt, in vorzugsweise dichter Weise, insbesondere mittels der Überwurfmutter, verbindbar und fixierbar ist.

In vorteilhafter Weise kann dieser Blindstopfen einerseits dazu verwendet werden, die stutzenseitige Verbindungsvorrichtung des Adapters dann, wenn die stutzenseitige Verbindungsvorrichtung des Adapters nicht mit einem Behälter- oder Wandstutzen verbunden ist, d. h. also in Ruhestellung des Adapters, in einer vordefinierten Position zu fixieren, damit der Adapter, der mit seiner anderen, d. h. seiner geräteseitigen Verbindungsvorrichtung an einem Schlauch oder Rohr befestigt ist, nicht unkontrolliert von dem Rohr absteht oder an dem Schlauch pendelt und hierbei möglicherweise an seiner stutzenseitigen Verbindungsvorrichtung beschädigt wird.

Eine Fixierung der stutzenseitigen Verbindungsvorrichtung des Adapters an dem Blindstopfen dient damit insbesondere einem Schutz der Oberflächen der stutzenseitigen Verbindungsvorrichtung des Adapters und dient darüber hinaus einer optimierten Handhabbarkeit des Adapters, dass sich dieser aufgrund der Fixierung an dem Blindstopfen in seiner Ruheposition immer an einer definierten Position befindet.

Diesbezüglich sei darauf hingewiesen, dass der Blindstopfen zu diesem Zweck fest an dem Gerät, mit welchem ein Gasaustausch oder eine Evakuierung eines jeweiligen Behälters durchgeführt wird, fixiert ist. Eine derartige Fixierung des Blindstopfens an der Pump- und/oder Gasaustauschvorrichtung kann beispielsweise durch ein Verschrauben, Verkleben oder auch durch ein Verschweißen an einem Bauteil der Pump- und/oder Gasaustauschvorrichtung erfolgen.

Des Weiteren sei darauf hingewiesen, dass der Blindstopfen hinsichtlich seiner Funktionalität im Wesentlichen analog zu dem Behälter- oder Wandstutzen ausgebildet ist und die stutzenseitige Verbindungsvorrichtung des Adapters in analoger Weise an dem Blindstopfen befestigt werden kann, wobei der Blindstopfen seinerseits einen geschlossenen Boden aufweist, an welchem eine Nut des Blindstopfens zur Aufnahme des nutseitigen Endes der stutzenseitigen Verbindungsvorrichtung vorgesehen ist.

Gemäß einer besonders bevorzugten Ausführungsform der Erfindung ist in dieser auf der geschlossenen Innenseite des Blindstopfens angeordneten Nut ferner eine Dichtung, beispielsweise in Form eines Gummis oder eines O-Rings vorgesehen, durch welche das nutseitige Ende der stutzenseitigen Verbindungsvorrichtung einerseits zusätzlich geschützt ist und durch welche andererseits die stutzenseitige Verbindungsvorrichtung durch den Blindstopfen dicht verschlossen werden kann. Zusätzlich zu der Dichtfunktion der Dichtung mittels Nut und/oder Gummi und/oder O-Ring kann eine Dichtung zwischen der stutzenseitigen Verbindungsvorrichtung und dem Blindstopfen, im Wesentlichen analog zur Dichtfunktion an dem Behälter- oder Wandstutzen, auch, respektive zusätzlich, durch eine dichte Anlage der Seitenwandung der stutzenseitigen Verbindungsvorrichtung an einer Innenseite des äußeren Stegs des Blindstopfens gewährleistet sein.

Gemäß einer alternativen Ausführungsform kann eine Dichtung zwischen der stutzenseitigen Verbindungsvorrichtung und dem Blindstopfen auch ausschließlich durch eine dichte Anlage der Seitenwandung der stutzenseitigen Verbindungsvorrichtung an einer Innenseite des äußeren Stegs des Blindstopfens gewährleistet sein, wobei die Nut, respektive der Gummi oder O-Ring, in diesem Fall lediglich einem Schutz des nutseitigen Endes der stutzenseitigen Verbindungsvorrichtung dient.

Durch einen derartigen dichten Verschluss der stutzenseitigen Verbindungsvorrichtung des Adapters mittels des Blindstopfens ist es in vorteilhafter Weise möglich, sowohl einen Druck- als auch einen Dichtigkeitstest des erfindungsgemäßen Verbindungssystems sowie des Gasaustausch- oder Evakuierungssystems durchzuführen.

Somit stellt die Vorsehung eines Blindstopfens für das erfindungsgemäße Verbindungssystem in doppelter Hinsicht ein äußerst vorteilhaftes Merkmal dar, nämlich einerseits eine räumliche Fixierung und Sicherung der stutzenseitigen Verbindungsvorrichtung und damit auch des Adapters sowie andererseits die Möglichkeit, die Funktionalität des Gasaustausch- oder Evakuierungssystems sowie des erfindungsgemäßen Verbindungssystems hinsichtlich Druckfestigkeit und Dichtigkeit zu testen.

Gemäß einer weiteren Ausführungsform der Erfindung ist die geräteseitige Verbindungsvorrichtung des Adapters als Schraub- oder als Klemmverbindung ausgebildet. Hierbei kann erfindungsgemäß auf gängige Schraub- oder Klemmverbindungen zurückgegriffen werden.

Wie vorerwähnt weist die Überwurfmutter erfindungsgemäß eine wieder öffenbare Schnellverschlussvorrichtung, insbesondere ein Schnellverschlussgewinde, sowie gegebenenfalls eine zumindest abschnittsweise profilierte, insbesondere geriffelte, umfängliche Außenseite auf.

Durch die Profilierung der umfänglichen Außenseite der Überwurfmutter kann diese händisch oder mit einem Werkzeug einfach ergriffen und bedient sowie auf einfache Weise fixiert oder gelöst werden. Als vorteilhaft hat sich hierbei eine Schnellverschlussvorrichtung erwiesen, bei welcher eine Fixierung oder ein Lösen bereits mit einem Bruchteil einer vollen Umdrehung, beispielsweise mit einer halben Umdrehung, einer Viertelumdrehung oder auch einer Achtelumdrehung erreicht wird.

Des Weiteren wird erfindungsgemäß insbesondere auch ein Adapter, insbesondere für ein Gasaustausch- oder Evakuierungssystem beansprucht, der für ein Verbindungssystem gemäß vorstehenden Ausführungen geeignet ist und insbesondere auch die erfindungsgemäße Aufgabe löst. Ein derartiger Adapter weist erfindungsgemäß die vorstehend geschilderten Merkmale auf, wobei insbesondere die Merkmale des Adapters in Bezug auf dessen stutzenseitige Verbindungsvorrichtung wesentlich sind.

Insbesondere wird die Aufgabe der Erfindung somit auch durch einen Adapter, insbesondere für ein Verbindungssystem, wie beispielsweise für ein Gasaustausch- oder Evakuierungssystem, zum Verbinden eines Schlauchs oder Rohrs mit einem Behälter- oder Wandstutzen gelöst, wobei der Adapter eine stutzenseitige und eine geräteseitige Verbindungsvorrichtung sowie einen sich zwischen der stutzenseitigen und der geräteseitigen Verbindungsvorrichtung erstreckenden durchgängigen Leitungsabschnitt aufweist, wobei die stutzenseitige Verbindungsvorrichtung umgekehrt topfartig ausgebildet ist und einen Boden mit einer mit dem durchgängigen Leitungsabschnitt kommunizierenden Öffnung sowie eine sich um die Öffnung und von dem Boden weg erstreckende umlaufende Seitenwandung aufweist, wobei die geräteseitige Verbindungsvorrichtung des Adapters als Schraub- oder als Klemmverbindung ausgebildet ist.

Des Weiteren wird die erfindungsgemäße Aufgabe auch durch eine Verwendung eines Adapters gemäß vorstehenden Ausführungen für ein Verbindungssystem, insbesondere für ein Gasaustausch- oder Evakuierungssystem, zum Verbinden eines Schlauchs oder Rohrs mit einem Behälter- oder Wandstutzen gelöst.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden.

Hierbei zeigen:
- Fig. 1: eine schematische Darstellung eines Verbindungssystems für ein Gasaustauschsystem gemäß dem Stand der Technik;
- Fig. 2: eine schematische Darstellung einer Ausführungsform des erfindungsgemäßen Verbindungssystems;
- Fig. 3: eine schematische Darstellung einer Ausführungsform eines Adapters für das erfindungsgemäße Verbindungssystem in Seitenansicht;
- Fig. 4: eine schematische Darstellung der Ausführungsform eines Adapters gemäß Fig. 3 in Schnittansicht;
- Fig. 5: eine schematische Darstellung der Ausführungsform eines Adapters gemäß Fig. 3 in perspektivischer Ansicht;
- Fig. 6: eine schematische Darstellung einer weiteren Ausführungsform eines Adapters für das erfindungsgemäße Verbindungssystem in Seitenansicht;
- Fig. 7: eine schematische Darstellung der Ausführungsform eines Adapters gemäß Fig. 6 in Schnittansicht;
- Fig. 8: eine schematische Darstellung der Ausführungsform eines Adapters gemäß Fig. 6 in perspektivischer Ansicht;
- Fig. 9: eine schematische Darstellung einer Ausführungsform einer Überwurfmutter für das erfindungsgemäße Verbindungssystem in Aufsicht;
- Fig. 10: eine schematische Darstellung der Ausführungsform einer Überwurfmutter gemäß Fig. 9 in Seitenansicht;
- Fig. 11: eine schematische Darstellung der Ausführungsform einer Überwurfmutter gemäß Fig. 9 in perspektivischer Ansicht;
- Fig. 12: eine schematische Darstellung einer Ausführungsform eines Blindstopfens in perspektivischer Ansicht von schräg unten;
- Fig. 13: eine schematische Darstellung der Ausführungsform des Blindstopfens gemäß Fig. 12 in perspektivischer Seitenansicht von schräg oben; und
- Fig. 14: eine schematische Darstellung der Ausführungsform des Blindstopfens gemäß Fig. 12 in einer Ansicht von unten.

In der nachfolgenden Beschreibung werden für gleiche und gleich wirkende Teile dieselben Bezugsziffern verwendet.

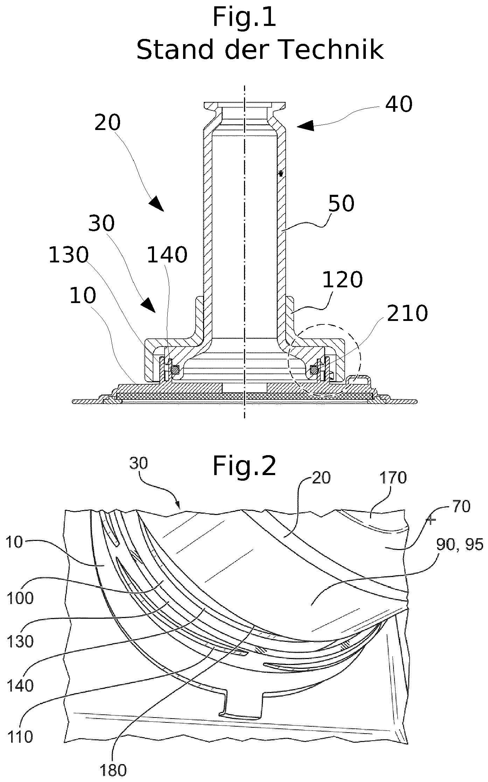

Fig. 1 zeigt eine schematische Darstellung eines Verbindungssystems für ein Gasaustauschsystem gemäß dem Stand der Technik.

Gemäß Fig. 1 ist gut zu erkennen, dass ein Adapter 20 mittels einer stutzenseitigen Verbindungsvorrichtung auf einen Behälter- oder Wandstutzen 10 aufgesetzt ist. Der Adapter 20 gemäß dem Stand der Technik weist stutzenseitig einen klauenartigen U-förmigen Abschnitt auf, der einen inneren Steg 140 des Behälter- oder Wandstutzens 10 umgreift, wobei ein längerer Schenkel des U-förmigen Abschnitts seinerseits eine Ausnehmung in Form einer Nut aufweist, in die ein O-Ring 210 eingesetzt ist, der seinerseits eine dichte Verbindung des Adapters 20 mit dem Behälter- oder Wandstutzens 10 gewährleisten soll. Bei einem Verwenden oder Entfernen des dortigen Adapters von dem Behälter- oder Wandstutzen 10 besteht aufgrund der zwischen dem inneren Steg 140 und dem O-Ring 210 auftretenden Reibung die Gefahr, dass der O-Ring aus der dafür vorgesehenen Ausnehmung heraus gedrückt wird oder heraus rollt, so dass die Verbindung zwischen Adapter und Stutzen zum einen nicht mehr dicht ist und darüber hinaus die Gefahr besteht, dass der O-Ring in die Öffnung des Behälters und damit in das Füllgut fällt und das Füllgut kontaminiert.

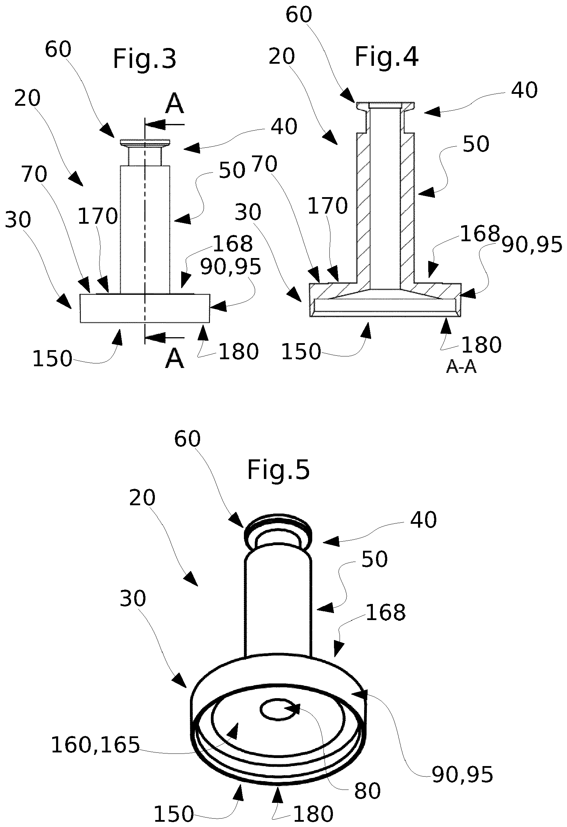

Fig. 2 zeigt eine schematische Darstellung einer Ausführungsform des erfindungsgemäßen Verbindungssystems, wobei dargestellt ist, in welcher Weise eine stutzenseitige Verbindungsvorrichtung 30 mit ihrer Seitenwandung 90 in eine Nut 100 eines Behälter- oder Wandstutzens 10 eingesetzt wird. Die Seitenwandung 90 der stutzenseitigen Verbindungsvorrichtung 30 wird hierbei so in die Nut 100 eingesetzt, dass die Außenseite 95 der Seitenwandung 90 im Zuge eines Einsetzens in die Nut 100 mit dem äußeren Steg 130 in Kontakt kommt, der die Nut radial außen begrenzt, während die Nut radial innen von dem inneren Steg 140 begrenzt wird. Das nutseitige Ende 180 der Seitenwandung 90 wird erfindungsgemäß in Richtung eines Bodens der Nut 100 bewegt. Des Weiteren ist in Fig. 2 zu erkennen, dass der äußere Steg 130 an seiner radial äußeren Seite eine Gewinde- oder Bajonettverschlussvorrichtung aufweist, mit welcher die stutzenseitige Verbindungsvorrichtung 30 des Adapters 20 unter Zuhilfenahme einer in Fig. 2 nicht gezeigten Überwurfmutter an dem Behälter- oder Wandstutzen 10 befestigt werden kann. Des Weiteren ist in Fig. 2 gezeigt, dass die stutzenseitige Verbindungsvorrichtung 30 topfartig ausgebildet ist und neben einer sich von einem Boden 70 weg erstreckenden Seitenwandung 90 einen Absatz 170 aufweist, der auf der stutzenabgewandten Seite des Bodens 70 angeordnet ist und sich, wie beispielsweise in den Fig. 3, Fig. 4 sowie Fig. 6 und Fig. 7 erkennbar ist, um den Leitungsabschnitt 50 des erfindungsgemäßen Adapters 20 herum erstreckt.

Die Fig. 3 bis Fig. 5 zeigen schematische Darstellungen von unterschiedlichen Ansichten eines Adapters 20 für das erfindungsgemäße Verbindungssystem, nämlich gemäß Fig. 3 in Seitenansicht, gemäß Fig. 4 in Schnittansicht entlang der Linie A-A, die in Fig. 3 angezeigt ist, sowie gemäß Fig. 5 in perspektivischer Ansicht. Der Adapter 20 umfasst seinerseits einen Leitungsabschnitt 50, der einerseits eine stutzenseitige Verbindungsvorrichtung 30 und andererseits eine geräteseitige Verbindungsvorrichtung 40 aufweist. Die geräteseitige Verbindungsvorrichtung 40 ist als Klemmabschnitt 60 ausgebildet, um ein Rohr oder einen Schlauch (nicht gezeigt) mittels einer Klemmvorrichtung an dem Klemmabschnitt 60 dicht zu befestigen.

Die stutzenseitige Verbindungsvorrichtung 30 ist ihrerseits, wie insbesondere in Fig. 3 bis Fig. 5 zu erkennen ist, umgekehrt topfförmig ausgebildet, was bedeutet, dass sich der Topfboden 70 oben und in Verbindung mit dem Leitungsabschnitt 50 befindet, mit welchem die Innenseite 160 des "Topfes" über eine Öffnung 80 kommunizierend verbunden ist. Der Boden 70 der topfförmigen stutzenseitigen Verbindungsvorrichtung 30, also die innere Bodenseite 165, ist ihrerseits in Richtung auf die Öffnung 80 trichterförmig ausgebildet. Von dem Boden 70 der topfförmigen stutzenseitigen Verbindungsvorrichtung 30 erstreckt sich eine Seitenwandung 90 in die dem Leitungsabschnitt 50 entgegengesetzte Richtung, wobei die Seitenwandung 90 in Richtung ihres offenen Endes 150 hinsichtlich ihres Durchmessers sowie Umfangs konisch verläuft und an ihrem offenen Ende 150 einen etwas geringeren Durchmesser aufweist als an ihrem bodenseitigen Ende. Die Konizität der Seitenwandung 90 beträgt hierbei 1,675° und dient sowohl einer optimalen Einführbarkeit der Seitenwandung 90 in die Nut 100 als auch einer optimalen Abdichtung der Seitenwandung 90, respektive der Außenseite 95 der Seitenwandung 90, an dem äußeren Steg 130, wenn die Seitenwandung 90 in ihrer dichtenden Endposition in die Nut 100 eingeführt ist. Des Weiteren ist insbesondere in den Fig. 4 und Fig. 5, aber auch in Fig. 3 zu erkennen, dass das nutseitige Ende 180 der Seitenwandung 90 im Wesentlichen plan ausgebildet ist, um auf diese Weise in in die Nut 100 eingesetztem Zustand einen optimalen Formschluss mit dem Boden der Nut 100 zu gewährleisten, was insbesondere dann, wenn das nutseitige Ende 180 der Seitenwandung 90 den Boden der Nut 100 erreicht und nicht durch einen Kontakt der Außenseite 95 der Seitenwandung 90 mit der Innenseite des äußeren Stegs 130 einerseits bereits eine Dichtung zwischen der stutzenseitigen Verbindungsvorrichtung 30 und dem Stutzen erfolgt, jedoch andererseits auch eine Einschubbegrenzung der Seitenwandung 90 in die Nut 100 gegeben ist, ebenfalls zur Dichtigkeit des erfindungsgemäßen Verbindungssystems beiträgt.

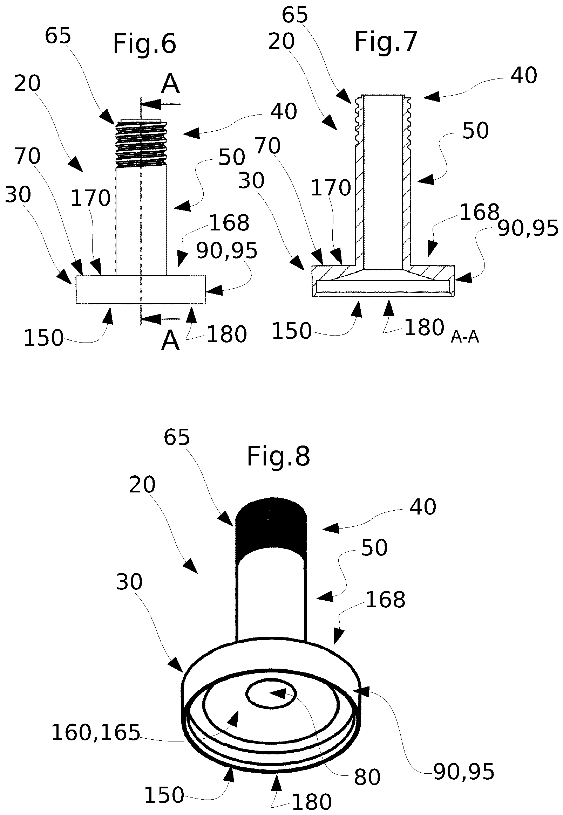

Die Fig. 6 bis Fig. 8 zeigen eine schematische Darstellung einer weiteren Ausführungsform eines Adapters 20 für das erfindungsgemäße Verbindungssystem, wiederum in Seitenansicht, Schnittansicht und perspektivischer Ansicht, wobei die geräteseitige Verbindungsvorrichtung 40 im Falle der Ausführungsform gemäß Fig. 6 bis Fig. 8 als Gewindeabschnitt 65 ausgebildet ist, an welchen ein hier nicht gezeigtes Rohr oder ein Schlauch in dichter Weise angeschlossen werden kann. Im Übrigen entspricht der in den Fig. 6 bis Fig. 8 dargestellte Adapter 20 insbesondere hinsichtlich seiner stutzenseitigen Verbindungsvorrichtung 30 der in den Fig. 3 bis Fig. 5 dargestellten Ausführungsform.

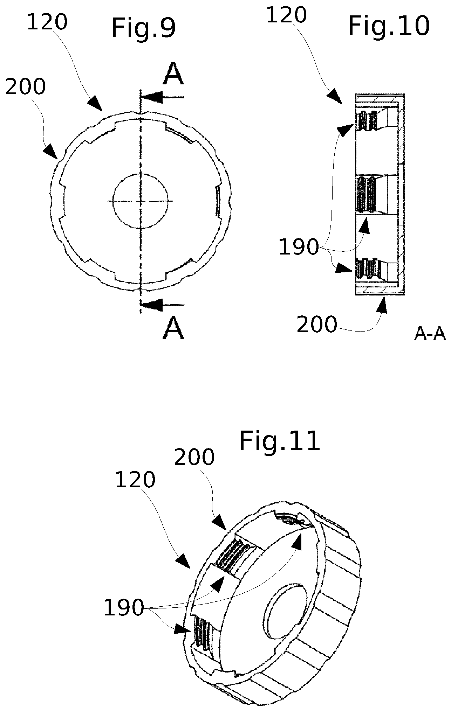

Die Fig. 9 bis Fig. 11 zeigen eine schematische Darstellung einer Ausführungsform einer Überwurfmutter 120 in Aufsicht sowie in Seitenansicht und perspektivischer Ansicht. Die Überwurfmutter 120 weist ein zentrales Loch, respektive eine zentrale Öffnung auf, mit welcher die Überwurfmutter 120 über den Leitungsabschnitt 50 des Adapters 20 führbar und so über die stutzenseitige Verbindungsvorrichtung 30 stülpbar ist, dass die Überwurfmutter 120 mit der an dem äußeren Steg 130 ausgebildeten Gewinde- oder Bajonettverschlussvorrichtung 110, die beispielhaft in Fig. 2 gezeigt ist, zusammenwirken kann, wobei die Überwurfmutter zu diesem Zweck eine korrespondierende Schnellverschlussvorrichtung 190 aufweist. Im Übrigen ist die Außenseite 200 der Überwurfmutter 120 mit einer Profilierung versehen, die ein Greifen und Handhaben der Überwurfmutter 120 vereinfacht.

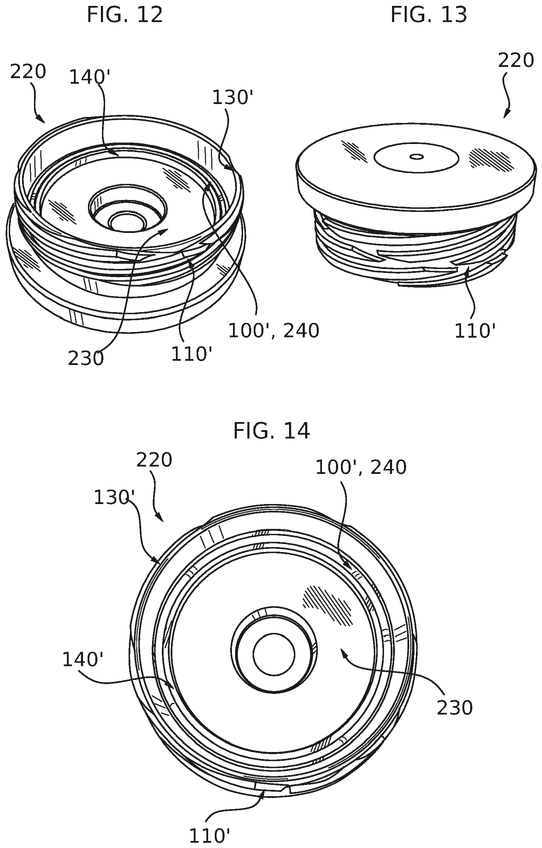

Die Fig. 12 bis Fig. 14 zeigen unterschiedliche schematische Darstellungen einer Ausführungsform eines Blindstopfens 220 in perspektivischen Ansichten von schräg unten, nämlich gemäß Fig. 12, von schräg oben, nämlich gemäß Fig. 13, und von unten, nämlich gemäß Fig. 14. Diesbezüglich sei darauf hingewiesen, dass in Bezug auf den Blindstopfen 220 die Bezeichnung "unten" die Einführrichtung der stutzenseitigen Verbindungsvorrichtung 30 in den Blindstopfen 220 bezeichnet, während die Bezeichnung "oben" die entgegengesetzte Richtung kennzeichnet.

Der Blindstopfen 220 ist seinerseits topfartig ausgebildet, wobei der Blindstopfen 220 einen innenliegenden Boden 230 aufweist, der außenseitig durch einen äußeren Steg 130' des Blindstopfens 220 begrenzt ist. Der äußere Steg 130' begrenzt seinerseits zusammen mit einem inneren Steg 140' des Blindstopfens 220 eine Nut 100' des Blindstopfens 220, wobei in der Nut 100' des Blindstopfens 220 eine Dichtung 240 des Blindstopfens 220 vorgesehen ist, auf welche ein nutseitiges Ende der stutzenseitigen Verbindungsvorrichtung aufsetzbar ist.

Außenseitig des äußeren Stegs 130' des Blindstopfens 220 ist eine Gewinde- oder Bajonettverschlussvorrichtung 110' des Blindstopfens 220 vorgesehen, auf welche eine Überwurfmutter aufgeschraubt werden kann, mit welcher die stutzenseitige Verbindungsvorrichtung an dem Blindstopfen fixiert und nach Wunsch dicht verbunden werden kann. Der Boden 230 des Blindstopfens 220 ist geschlossen und kann mit seiner Rückseite, d. h. seiner der stutzenseitigen Verbindungsvorrichtung abgewandten Seite, also gemäß obiger Definition seiner Oberseite, an einem Gerät eines Gasaustausch- oder Evakuierungssystems befestigt, beispielsweise angeschweißt, sein.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Behälter- oder Wandstutzen
- 20: Adapter
- 30: stutzenseitige Verbindungsvorrichtung
- 40: geräteseitige Verbindungsvorrichtung
- 50: Leitungsabschnitt
- 60: Klemmabschnitt
- 65: Gewindeabschnitt
- 70: Boden
- 80: Öffnung
- 90: Seitenwandung
- 95: Außenseite der Seitenwandung
- 100: Nut
- 100': Nut des Blindstopfens
- 110: Gewinde- oder Bajonettverschlussvorrichtung
- 110': Gewinde- oder Bajonettverschlussvorrichtung des Blindstopfens
- 120: Überwurfmutter
- 130: äußerer Steg
- 130': äußerer Steg des Blindstopfens
- 140: innerer Steg
- 140': innerer Steg des Blindstopfens
- 150: offenes Ende
- 160: Innenseite
- 165: innere Bodenseite
- 168: äußere Bodenseite
- 170: Absatz
- 180: nutseitiges Ende
- 190: Schnellverschlussvorrichtung
- 200: Außenseite der Überwurfmutter
- 210: O-Ring
- 220: Blindstopfen
- 230: Boden des Blindstopfens
- 240: Dichtung des Blindstopfens

## Patentansprüche

1. Verbindungssystem, insbesondere für ein Gasaustausch- oder Evakuierungssystem, zum Verbinden eines Schlauchs oder Rohrs mit einem Behälter- oder Wandstutzen (10), wobei das Verbindungssystem
- einen Adapter (20) mit einer stutzenseitigen Verbindungsvorrichtung (30) und einer geräteseitigen Verbindungsvorrichtung (40) sowie einen zwischen der stutzenseitigen (30) und der geräteseitigen Verbindungsvorrichtung (40) angeordneten durchgängigen Leitungsabschnitt (50), sowie
- einen mit der stutzenseitigen Verbindungsvorrichtung (30) zusammenwirkenden Behälter- oder Wandstutzen (10), sowie ferner
- einen mit der geräteseitigen Verbindungsvorrichtung (40) zusammenwirkenden Klemm- (60) und/oder Gewindeabschnitt (65) eines Schlauchs oder Rohrs
umfasst,
**dadurch gekennzeichnet, dass**
die stutzenseitige Verbindungsvorrichtung (30) topfartig ausgebildet ist und einen Boden (70) mit einer mit dem durchgängigen Leitungsabschnitt (50) kommunizierenden Öffnung (80) sowie eine sich um die Öffnung (80) erstreckende an dem Boden (70) umlaufende Seitenwandung (90) aufweist, wobei die Seitenwandung (90) in eine behälter- oder wandstutzenseitige Nut (100) einschiebbar und in einer in die Nut (100) eingeschobenen Position fixierbar ist.

2. Verbindungssystem nach Anspruch 1,
**dadurch gekennzeichnet, dass**
eine Fixierung der Seitenwandung (90) in der Nut (100) mittels wenigstens einer radial außenseitig der Nut (100) angeordneten wieder lösbaren Rastvorrichtung oder mittels einer sich über die topfartige stutzenseitige Verbindungsvorrichtung (30) erstreckenden und mit einer radial außenseitig der Nut (100) angeordneten Gewinde- oder Bajonettverschlussvorrichtung (110) verschraubbaren Überwurfmutter (120), die vorzugsweise aus Metall, insbesondere Edelstahl, und/oder einem, insbesondere duroplastischen, Kunststoff, insbesondere, vorzugsweise lebensmittelechtem, Polytetrafluorethylen (PTFE), hergestellt ist, durchgeführt wird.

3. Verbindungssystem nach einem der vorhergehenden Ansprüche,
**dadurch gekennzeichnet, dass**
die behälter- oder wandstutzenseitige Nut (100) zumindest einen sich im Wesentlichen konzentrisch von dem Behälter oder der Wand weg erstreckenden äußeren Steg (130) aufweist, der an seiner Außenseite wenigstens ein Rastelement und/oder die mit der Überwurfmutter zusammenwirkende Feststellvorrichtung, insbesondere Schraubvorrichtung, aufweist.

4. Verbindungssystem nach einem der vorhergehenden Ansprüche,
**dadurch gekennzeichnet, dass**
die behälter- oder wandstutzenseitige Nut (100) von dem äußeren Steg (130) und einem konzentrisch zu dem äußeren Steg (130) verlaufenden inneren Steg (140) gebildet ist.

5. Verbindungssystem nach einem der vorhergehenden Ansprüche,
**dadurch gekennzeichnet, dass**
sich ein Umfang der Seitenwandung (90) und/oder eine Außenseite (95) der Seitenwandung (90) der stutzenseitigen Verbindungsvorrichtung (30) ausgehend vom Boden (70) der stutzenseitigen Verbindungsvorrichtung (30) hin zu einem offenen Ende (150) der stutzenseitigen Verbindungsvorrichtung (30), gegebenenfalls zunehmend, verjüngt.

6. Verbindungssystem nach einem der vorhergehenden Ansprüche,
**dadurch gekennzeichnet, dass**
eine Innenseite (160), insbesondere eine innere Bodenseite (165), der topfartigen stutzenseitigen Verbindungsvorrichtung (30) in Richtung der mit dem durchgängigen Leitungsabschnitt (50) kommunizierenden Öffnung (80) trichterartig ausgebildet ist.

7. Verbindungssystem nach einem der vorhergehenden Ansprüche,
**dadurch gekennzeichnet, dass**
eine sich in Richtung des Leitungsabschnitts (50) erstreckende äußere Bodenseite (168) der topfartigen stutzenseitigen Verbindungsvorrichtung (30) in Richtung des durchgängigen, vorzugsweise rohrförmigen, Leitungsabschnitts (50) zumindest abschnittsweise, gegebenenfalls absatzförmig, ansteigt, so dass sich an der äußeren Bodenseite (168) zumindest ein Absatz (170) oder zumindest zwei, vorzugsweise wenigstens drei gleichförmige Erhebungen um den Leitungsabschnitt (50) erstrecken.

8. Verbindungssystem nach einem der vorhergehenden Ansprüche,
**dadurch gekennzeichnet, dass**
die Seitenwandung (90) der topfartigen stutzenseitigen Verbindungsvorrichtung (30) an ihrem nutseitigen Ende (180) glatt und eben ausgebildet ist, so dass das nutseitige Ende (180) in verbundenem Zustand des Adapters (20) mit dem Behälter- oder Wandstutzen (10), insbesondere dichtend, formschlüssig am Boden der Nut (100) anliegt.

9. Verbindungssystem nach einem der vorhergehenden Ansprüche,
**dadurch gekennzeichnet, dass**
die Außenseite (95) der Seitenwandung (90) des Adapters (20) in mit dem Behälter- oder Wandstutzen (10) verbundenem Zustand dichtend an dem äußeren Steg (130) der Nut (100) anliegt.

10. Verbindungssystem nach einem der vorhergehenden Ansprüche,
**dadurch gekennzeichnet, dass**
die stutzenseitige Verbindungsvorrichtung (30) des Adapters (20) keine verlierbaren oder lösbaren Dichtungsteile, insbesondere keine(n) Dichtungs- und/oder O-Ring(e), aufweist.

11. Verbindungssystem nach einem der vorhergehenden Ansprüche,
**dadurch gekennzeichnet, dass**
das Verbindungssystem ferner einen Blindstopfen (220) umfasst, mit und/oder an dem die stutzenseitige Verbindungsvorrichtung (30) des Adapters (20) in einer Ruhestellung des Verbindungssystems, in welcher die stutzenseitige Verbindungsvorrichtung (30) des Adapters (20) nicht mit dem Behälter- oder Wandstutzen (10) zusammenwirkt, in vorzugsweise dichter Weise, insbesondere mittels der Überwurfmutter (120), verbindbar und fixierbar ist.

12. Verbindungssystem nach einem der vorhergehenden Ansprüche,
**dadurch gekennzeichnet, dass**
die geräteseitige Verbindungsvorrichtung (40) des Adapters (20) als Schraub- (65) oder als Klemmverbindung (60) ausgebildet ist.

13. Verbindungssystem nach einem der vorhergehenden Ansprüche 2 bis 12, **dadurch gekennzeichnet, dass**
die Überwurfmutter (120) eine wieder öffenbare Schnellverschlussvorrichtung (190), insbesondere ein Schnellverschlussgewinde, sowie gegebenenfalls eine zumindest abschnittsweise profilierte, insbesondere geriffelte, umfängliche Außenseite (200) aufweist.

14. Adapter (20), insbesondere für ein Verbindungssystem, wie beispielsweise für ein Gasaustausch- oder Evakuierungssystem, zum Verbinden eines Schlauchs oder Rohrs mit einem Behälter- oder Wandstutzen (10), wobei der Adapter (20) eine stutzenseitige (30) und eine geräteseitige Verbindungsvorrichtung (40) sowie einen sich zwischen der stutzenseitigen (30) und der geräteseitigen Verbindungsvorrichtung (40) erstreckenden durchgängigen Leitungsabschnitt (50) aufweist,
**dadurch gekennzeichnet, dass**
die stutzenseitige Verbindungsvorrichtung (30) topfartig ausgebildet ist und einen Boden (70) mit einer mit dem durchgängigen Leitungsabschnitt (50) kommunizierenden Öffnung (80) sowie eine sich um die Öffnung (80) und von dem Boden (70) weg erstreckende umlaufende Seitenwandung (90) aufweist, wobei die geräteseitige Verbindungsvorrichtung (40) des Adapters (20) als Schraub- (65) oder als Klemmverbindung (60) ausgebildet ist.

15. Verwendung eines Adapters (20) nach Anspruch 14 für ein Verbindungssystem, insbesondere für ein Gasaustausch- oder Evakuierungssystem, zum Verbinden eines Schlauchs oder Rohrs mit einem Behälter- oder Wandstutzen (10).
